# EUROPEAN PATENT APPLICATION

(11) **EP 2 597 389 A2**
(43) Date of publication of application: **29.05.2013**
(21) Application number: 12192667.9
(22) Date of filing: 14.11.2012
(51) Int. Cl.: F24F 11/00

(54) **Fan speed control for air-cooled condenser in precision cooling**

(30) Priority: 14.11.2011 CN 201110359448; 07.06.2012 US 201213490820
(71) Applicant: Liebert Corporation, Columbus, OH 43085 (US)
(72) Inventor: Lu, Zongtao, Pittsburgh, PA Pennsylvania 15238 (US); Li, Jianping, Shenzen (CN); Zhang, Hongyu, 710075 Xi'an Shaanxi (CN); Lin, Wanlai, Dublin, OH Ohio 43017 (US); Sillato, Stephen, Westerville, OH Ohio 43081 (US); Noll, Roger, Gahanna, OH Ohio 43230 (US); Judge, John F., Galena, OH Ohio 43021 (US); Fan, Yizhou, 710075 Xi'an Shaanxi (CN); Ward, Craig, Dublin, OH Ohio 43016 (US)
(74) Representative: Howson, Richard G.B.

(57) **Abstract**

An air conditioner system including a condenser fan, an ambient temperature sensor, a refrigerant pressure sensor, and a controller. The ambient temperature sensor is to sense ambient temperature at the system. The refrigerant pressure sensor is to sense pressure of a refrigerant of the system. The target refrigerant pressure module is to identify an optimum pressure of the refrigerant in the system. The controller is to generate an output representing a speed of the condenser fan operable to maintain the pressure of the refrigerant at about the optimum pressure as the ambient temperature of the system changes.

## Description

### FIELD

The present disclosure relates to fan speed control for an air-cooled condenser.

### BACKGROUND

This section provides background information related to the present disclosure, which is not necessarily prior art.

Cooling systems, such as the type that utilize a vapor compression cycle, can include a compressor, a condenser, an expansion device, and an evaporator. The compressor is operable to condense a working fluid or refrigerant from a suction pressure to a discharge pressure, which is supplied to a condenser. In the condenser, heat is removed from the refrigerant while the refrigerant is at an elevated pressure. The refrigerant flows from the condenser through an expansion device wherein the pressure is reduced. From there, the refrigerant flows through an evaporator wherein heat is added and the temperature of the refrigerant is increased. The refrigerant flows from the evaporator to the compressor and the process begins again.

The condenser may be an air-cooled condenser wherein a fan can be utilized to supply a flow of air over the condenser to facilitate the removal of heat from the refrigerant flowing therethrough. In these types of cooling systems, the current control methodology involves maintaining the condensing pressure (the pressure of the refrigerant at/in the condenser) at a fixed and elevated value to allow for proper function of an expansion valve. The fixed condensing pressure is a minimum condensing pressure. For example, the condensing pressure can be maintained at or above approximately 220 PSIG when R407C is utilized as a refrigerant, by way of non-limiting example. The condensing pressure can be maintained at or above the fixed elevated value by adjusting the operation of the condenser. For example, the speed of the fan that supplies the airflow through the condenser can be adjusted to maintain the fixed elevated condensing pressure with a variable frequency drive or a fan speed control. The condensing pressure can also be maintained at or above the fixed elevated value by adjusting inlet valves, head pressure control valves, or other means to reduce the effectiveness of the air-cooled condenser.

These modes of operation, however, can waste compressor energy (decrease efficiency), especially during cooler ambient conditions, by maintaining the condenser fan at a higher speed than is necessary, thus maintaining the condensing pressure at a value that is lower than necessary to meet the cooling load. Additionally, when the fan speed for the air-cooled condenser is increased to maintain the minimum condensing pressure, the noise generated by the fan can be excessive. The excessive noise may require the use of additional sound insulating or deadening materials to maintain the noise at an acceptable level.

Thus, it would be advantageous to provide a cooling system utilizing an air-cooled condenser and method of operation that can reduce the waste of compressor energy (increase efficiency) and/or reduce the noise generated by the cooling system, lower refrigerant charge, and reduce system weight. It would be further advantageous if the method allowed a flexible approach that can balance the needs for efficiency versus the desire for quiet operation. It would also be advantageous to maintain the temperature of the refrigerant robustly to different ambient temperatures.

### SUMMARY

This section provides a general summary of the disclosure, and is not a comprehensive disclosure of its full scope or all of its features.

The present teachings provide for an air conditioner system including a condenser fan, an ambient temperature sensor, a refrigerant pressure sensor, and a controller. The ambient temperature sensor is to sense ambient temperature at the system. The refrigerant pressure sensor is to sense pressure of a refrigerant of the system. The target refrigerant pressure module is to identify an optimum pressure of the refrigerant in the system. The controller is to generate an output representing a speed of the condenser fan operable to maintain the pressure of the refrigerant at about the optimum pressure as the ambient temperature of the system changes.

The present teachings also provide for an air conditioner system including a compressor, a condenser fan, an ambient temperature sensor, a refrigerant temperature sensor, a target refrigerant temperature module, and a controller. The ambient temperature sensor is to sense ambient temperature at the system. The refrigerant temperature sensor is to sense temperature of a refrigerant of the system. The target refrigerant temperature module is to identify an optimum temperature of the refrigerant in the system. The controller is to generate an output representing a speed of the condenser fan operable to maintain the temperature of the refrigerant at about the optimum temperature.

The present teachings further provide for a method for controlling a condensing fan of an air conditioner system with a controller. The method includes determining whether a compressor of the air conditioner system is on or off. The method further includes operating the condenser fan of the air conditioner system at a first speed corresponding to a sensed ambient temperature for a predetermined time period when the compressor is on. The method also includes operating the condenser fan at a second speed after expiration of the predetermined time period, the second speed determined by the controller based on the sensed ambient temperature and an error between a sensed refrigerant pressure and a target refrigerant pressure. The second speed is sufficient to move the sensed refrigerant pressure to the target refrigerant pressure.

The present teachings also provide for a method for controlling a condensing fan of an air conditioner system with a controller. The method includes stopping the condensing fan when sensed refrigerant temperature is less than a first predetermined refrigerant temperature. The method also includes operating the condensing fan at a first speed predetermined to correspond to sensed ambient temperature when sensed refrigerant temperature is greater than or equal to the first predetermined refrigerant temperature and less than a second predetermined refrigerant temperature. The method further includes operating the condensing fan at a second speed predetermined to correspond to sensed ambient temperature and based on error between sensed refrigerant temperature and a target refrigerant temperature when sensed refrigerant temperature is greater than or equal to the second predetermined refrigerant temperature and less than a third predetermined refrigerant temperature, the second speed sufficient to move sensed refrigerant temperature to the target refrigerant temperature. The method still further includes operating the condensing fan at a third speed based on error between sensed refrigerant temperature and the target refrigerant temperature when sensed refrigerant temperature is greater than or equal to a third predetermined refrigerant temperature that is greater than the second predetermined refrigerant temperature, the third speed sufficient to move sensed refrigerant temperature to the target refrigerant temperature.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.

Figure 1 is a block diagram that illustrates a cooling system according to the present teachings;

Figure 2 is a functional block diagram that illustrates a control system of the cooling system of Figure 1;

Figure 3 is a flow chart of a control method for a condensing fan of the cooling system;

Figure 4 is a functional block diagram that illustrates another control system of the cooling system of figure 1;

Figure 5 is a flow chart of another control method for the condensing fan of the cooling system; and

Figure 6 is a flow chart that provides additional detail regarding the control method of Figure 5.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail.

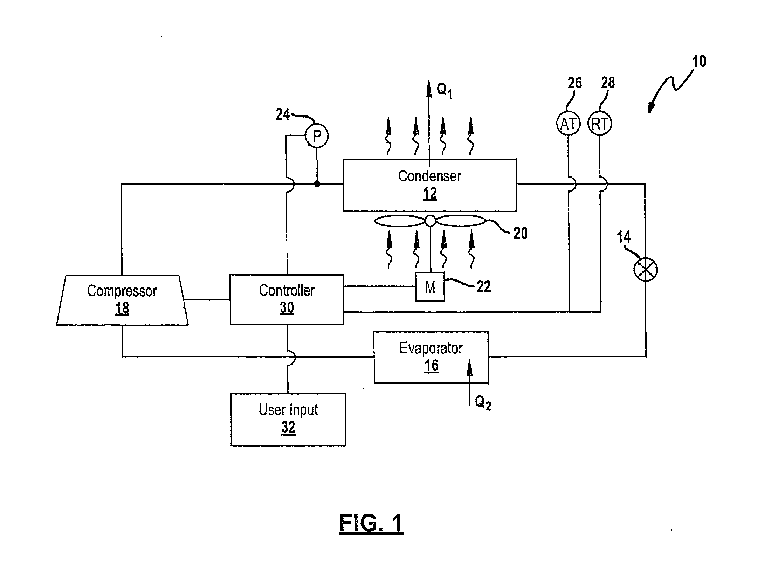

An overview of a cooling system according to the present teachings is generally illustrated in Figure 1 at reference numeral 10. The cooling system 10 includes an air-cooled condenser 12, an expansion device 14, an evaporator 16, and a compressor 18. The compressor 18 is operable to condense a refrigerant or working fluid from a suction pressure to a discharge pressure. The refrigerant exits compressor 18 and flows through condenser 12, expansion device 14, and evaporator 16, and then returns to compressor 18. Within condenser 12, heat Q₁ is removed from the refrigerant by an airflow flowing across condenser 12. The airflow is provided by a fan 20 powered by a motor 22. The pressure of the refrigerant is reduced as the refrigerant passes across expansion device 14. Within evaporator 16, heat Q₂ is transferred to the refrigerant flowing therethrough.

The cooling system 10 further includes various sensors or other devices for monitoring the system 10. For example, pressure sensor 24 senses condensing pressure of the refrigerant in the cooling system 10. Ambient temperature sensor 26 senses ambient temperature of the airflow supplied to the condenser 12 by the fan 20. Refrigerant temperature sensor 28 senses temperature of the refrigerant.

The cooling system 10 is generally controlled by a controller 30. The controller 30 is configured to receive various inputs, such as from the compressor 18, the pressure sensor 24, the ambient temperature sensor 26, the refrigerant temperature sensor 28, and the motor 22 representing a speed of the motor 22 and the fan 20, as further described herein. The controller 30 can also receive a user input 32, which is indicative of a desired operational mode for the cooling system 10. The controller 30 is further configured to generate various outputs, such as to the motor 22 of the condenser fan 20. As further described herein, the controller 30 includes various modules. As used herein, the term "module" refers to an application-specific integrated circuit (ASIC), an electronic circuit, a processor (shared, dedicated, or group), and memory that execute one or more software or firmware programs, a combinational logic circuit, or other suitable components that provide the described functionality.

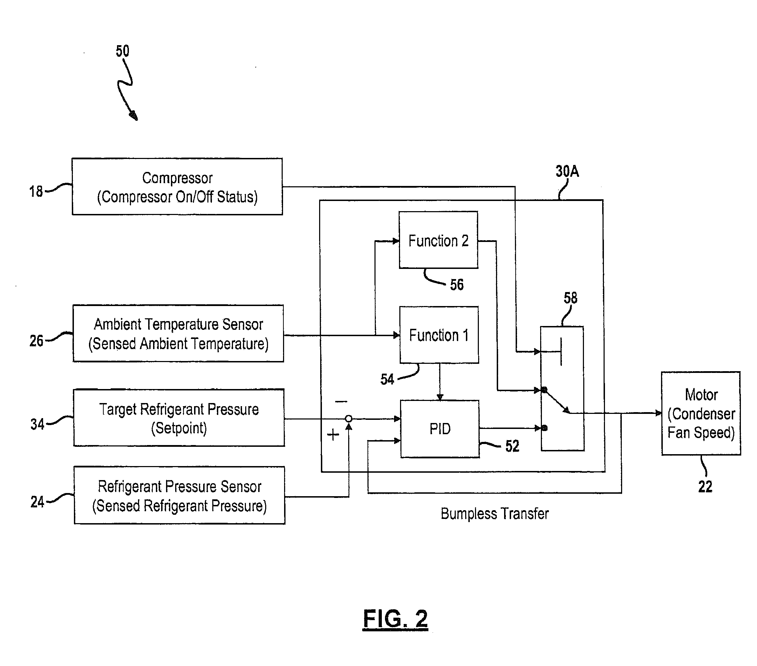

With additional reference to Figure 2, an exemplary control system of the cooling system 10 is generally illustrated at reference numeral 50. In the control system 50 of Figure 2, the controller 30 is illustrated as having a first controller configuration 30A (referred to herein as controller 30A). The controller 30A includes a proportional-integral-derivative controller (PID) module 52, a first function module 54, and a second function module 56. Switch 58 selects an output from the controller 30A, as further described herein.

The controller 30A can be a single module operable to perform the described functionality, a plurality of integrated modules, as shown, that can perform the described functionality, a combination of integrated and individual modules that can perform the described functionality, and/or one or more individual modules that can perform the described functionality. Thus, the controller 30A as illustrated and described is merely exemplary in nature and is not intended to limit the scope of the present disclosure. For example, while the controller 30A is described as including the PID module 52, any suitable control module can be included.

The controller 30A generates a condenser fan speed output to the motor 22 based on a variety of different inputs. For example, the compressor 18 provides an input to the controller 30A representing on/off status of the compressor. The refrigerant pressure sensor 24 provides an input representing observed refrigerant pressure. The ambient temperature sensor 26 provides an input representing observed ambient temperature. A target pressure (or setpoint) of the refrigerant is input to the controller 30A from module 34. The target pressure is a predetermined, optimum pressure based on efficiency and optimization calculations for the entire cooling system 10. As described herein, the controller 30A maintains the refrigerant at the target pressure even as ambient temperature detected by the ambient temperature sensor 26 changes by controlling the speed of the condenser fan 20 and the motor 22.

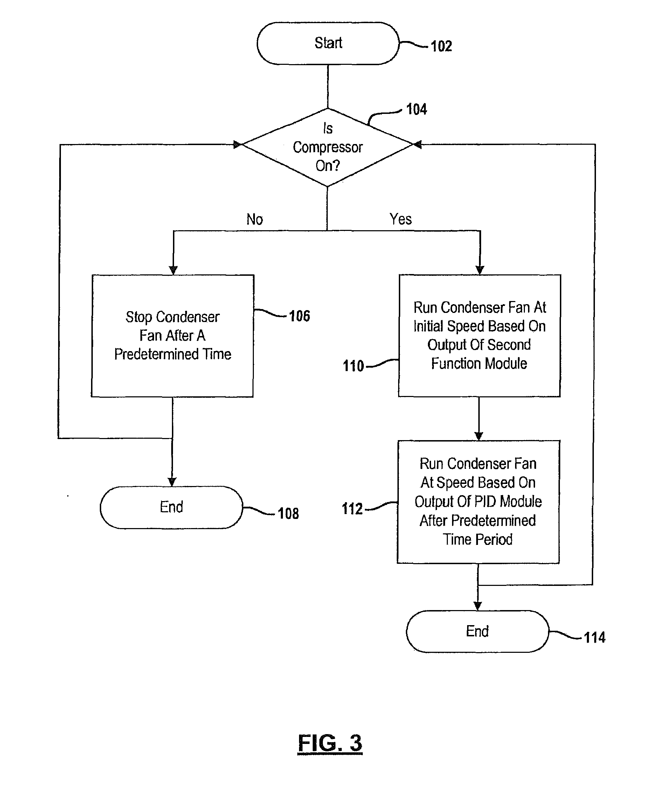

With additional reference to Figure 3, operation of the control system 50 will now be described. After initialization of the system 50 at start block 102, the system 50 determines at block 104 whether the compressor 18 is on or off based on the compressor on/off status input received by the controller 30A from the compressor 18. If the compressor is not on, then the controller proceeds to block 106 and stops the condenser fan 20 after 30 seconds of operation at a suitable speed. The controller 30A then ends operation at block 108. In various embodiments, control returns to block 104 to monitor the on/off status of the compressor 18.

If the compressor is on, then the controller 30A proceeds to block 110 and first sets the switch 58 such that output of the controller 30A is generated by the second function module 56. The second function module 56 generates an initial speed for the motor 22, and thus an initial speed for the fan 20 as well, based on ambient temperature sensed by the ambient temperature sensor 26. The initial speed generated at block 110 provides the controller 30A with a fast initial response that will set the speed of the condenser fan 20 high enough to prevent the sensed refrigerant pressure from exceeding the target refrigerant pressure, thus preventing a pressure "overshoot."

After a predetermined period of time, the controller 30A moves to block 112 and sets the switch 58 such that output of the controller 30A is generated by the PID module 52. The PID module 52 generates an output based on two inputs. The first input is generated by the first function module 54 and includes gains and parameters for the PID module 52 based on the ambient temperature observed by the ambient temperature sensor 26. The second input is the error between refrigerant pressure sensed by the refrigerant pressure sensor 24 and the target refrigerant pressure or setpoint generated at module 34. The output of the PID module 52 represents a speed for the motor 22, and thus a speed for the condenser fan 20 sufficient to bring the refrigerant pressure sensed by the refrigerant pressure sensor 24 to, or nearly to, the target refrigerant pressure of module 34. To provide a smooth transfer when the controller 30A switches output between the second function module 56 and the PID module 52, bumpless transfer is provided between the selected output of controller 30A and the PID module 52, as illustrated in Figure 2.

For as long as the controller 30A detects at block 104 that the compressor 18 is on, the PID module 52 will generate an output updated to maintain the refrigerant pressure sensed by the refrigerant pressure sensor 24 at, or approximate to, the target refrigerant pressure generated by module 34, while also taking into account changes in ambient temperature sensed by the ambient temperature sensor 26. The controller 30A can end operation at block 114 in response to, for example, user input 32.

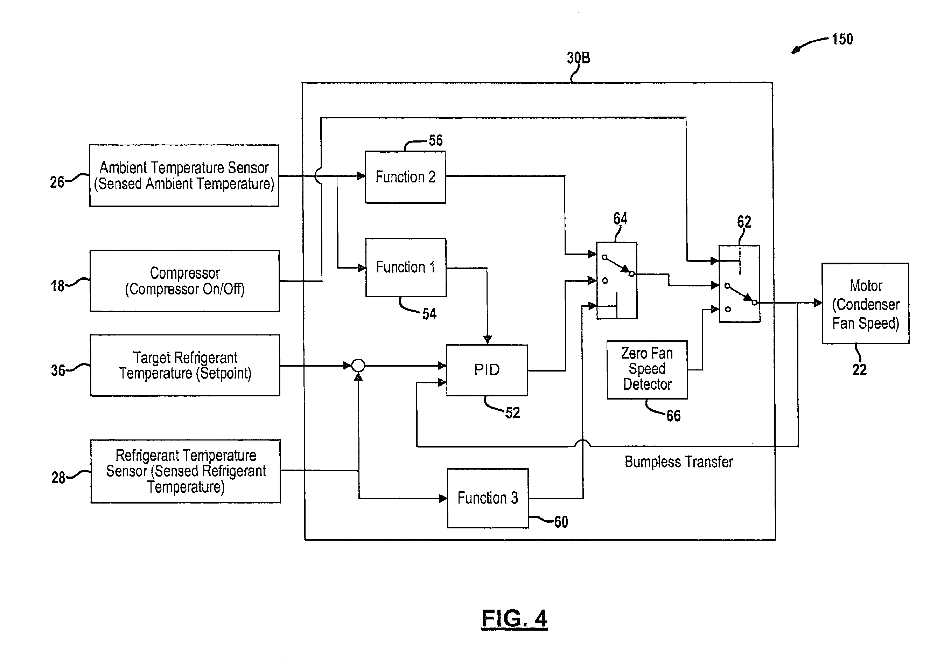

With additional reference to Figure 4, another exemplary control system of the cooling system 10 is generally illustrated at reference numeral 150. In the control system 150 of Figure 4, the controller 30 is illustrated as having a second controller configuration 30B (referred to herein as controller 30B). Like the controller 30A, the controller 30B includes the PID module 52, the first function module 54, and the second function module 56. The control system 150 further includes a third function module 60, a first switch 62, a second switch 64, and a zero fan speed detector 66. The controller 30B can be in place of or in addition to the controller 30A, as a backup for example, to control the speed of the condenser fan 20 based on the temperature of the refrigerant as sensed by the refrigeration temperature sensor 28.

Like the controller 30A, the controller 30B can be a single module operable to perform the described functionality, a plurality of integrated modules, as shown, that can perform the described functionality, a combination of integrated and individual modules that can perform the described functionality, and/or one or more individual modules that can perform the described functionality. Thus, the controller 30B as illustrated and described is merely exemplary in nature and is not intended to limit the scope of the present disclosure. For example, while the controller 30B is described as including the PID module 52, any suitable control module can be included.

The controller 30B generates a condenser fan speed output to the motor 22 based on a variety of different inputs. For example, the compressor 18 provides an input to the controller 30B at the first switch 62 representing on/off status of the compressor. The ambient temperature sensor 26 provides an input representing sensed ambient temperature to the first and second function modules 54 and 56. The refrigerant temperature sensor 28 provides an input representing sensed refrigerant temperature to the third function module 60. A target refrigerant temperature (or setpoint) of the refrigerant is input to the controller 30B from module 36. The error between the sensed refrigerant temperature and the target refrigerant temperature is input to the PID module 52. The target refrigerant temperature (or set point) is a predetermined temperature based on efficiency and optimization calculations for the entire cooling system 10. As described herein, the controller 30B maintains the refrigerant at the target temperature even as ambient temperature and various other environmental conditions change by controlling the speed of the condenser fan 20 and the motor 22.

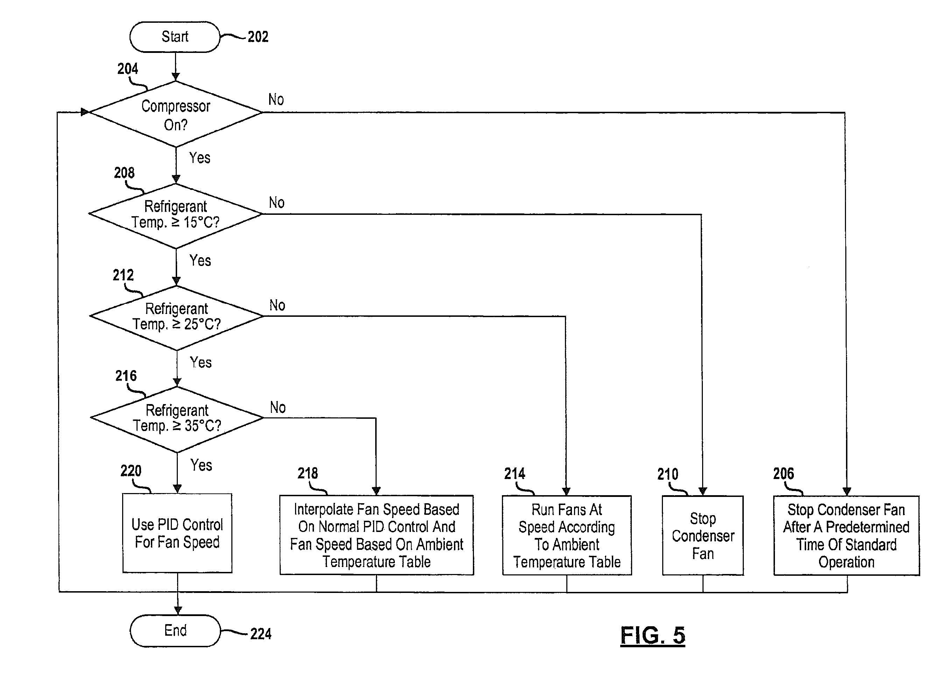

With additional reference to Figure 5, operation of the control system 150 will now be described. After initialization of the system 150 at start block 202, the controller 30B determines whether the compressor 18 is on or not. If the compressor 18 is not on, then the controller 30B proceeds to block 206 and stops the condenser fan 20 after a predetermined time of operation, such as about 30 seconds for example, at a predetermined speed. The predetermined speed can be any suitable speed, such as a speed sufficient to provide standard operation. If the controller 30B determines that the compressor is on, then the controller 30B proceeds to block 208. Otherwise, the controller 30B can end operation at block 224 or return to block 204. In various embodiments, control returns to monitor whether the compressor 18 is on or off.

At block 208, the controller 30B reads the input from the refrigerant temperature sensor 28 and accesses the third function module 60 to determine whether the refrigerant temperature is greater than or equal to 15°C for example, or another suitable preset temperature. If the refrigerant temperature is not greater than or equal to 15°C, then the controller 30B proceeds to block 210 and generates an output stopping the motor 22 and the condenser fan 20. If the refrigerant temperature is greater than or equal to 15°C, then the controller 30B proceeds to block 212. Otherwise, the controller 30B can end operation at block 224 or return to block 204. In various embodiments, control returns to monitor whether the compressor 18 is on or off.

At block 212, the controller 30B reads the input from the refrigerant temperature sensor 28 and accesses the third function module 60 to determine whether the refrigerant temperature is greater than or equal to 25°C for example, or another suitable preset temperature. If the refrigerant temperature is not greater than or equal to 25°C, then the controller 30B proceeds to block 214. At block 214, the controller 30B accesses the second function module 56, which includes an ambient temperature table with preset speeds for the condenser fan 20 based on ambient temperature. The controller 30B uses the second function module 56 to generate an output to the motor 22 to run the condenser fan 20 at a preset speed proscribed by the ambient temperature table based on ambient temperature sensed by the ambient temperature sensor 26. If the refrigerant temperature is greater than or equal to 25°C, then the controller 30B proceeds to block 216. Otherwise, the controller 30B can end operation at block 224 or return to block 204. In various embodiments, control returns to monitor whether the compressor 18 is on or off.

At block 216, the controller 30B reads the input from the refrigerant temperature sensor 28 and accesses the third function module 60 to determine whether the refrigerant temperature is greater than or equal to 35°C for example, or another suitable preset temperature. If the refrigerant temperature is not greater than or equal to 35°C, then the controller 30B proceeds to block 218. At block 218, generates a fan speed output to the motor 22 that interpolates fan speed based on control by the PID module 52 and fan speed proscribed by the ambient temperature table of the second function module 56. If the refrigerant temperature is greater than or equal to 35°C, then the controller 30B proceeds to block 220. Otherwise, the controller 30B can end operation at block 224 or return to block 204. In various embodiments, control returns to monitor whether the compressor 18 is on or off.

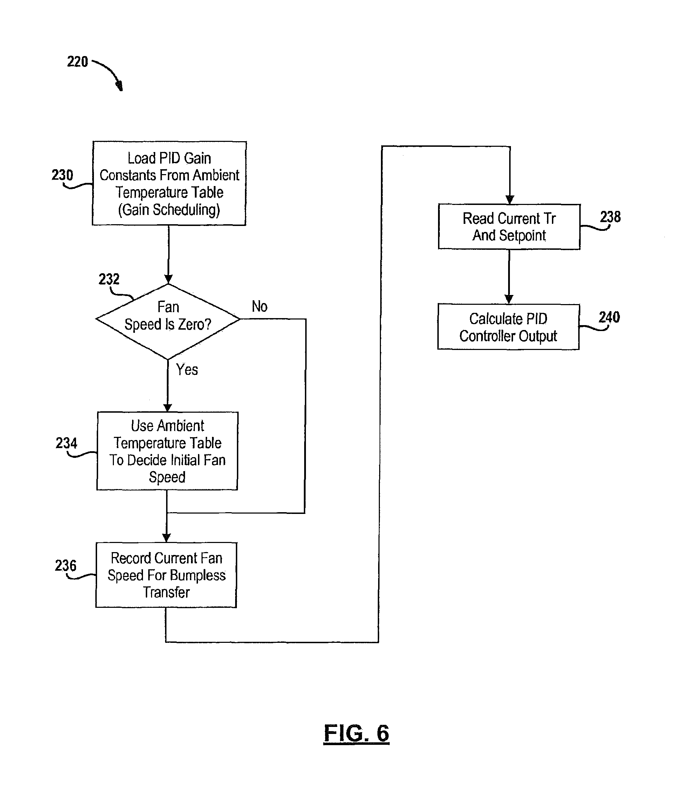

At block 220, the controller 30B uses PID module 52 to generate a fan speed output to the motor 22. With additional reference to Figure 6, block 220 uses the PID module 52 to control speed of the condenser fan 20 will be described in detail.

Within block 220, the controller 30B proceeds to block 230 and accesses the first function module 54 to load PID gain constants from the ambient temperature table of the second function module 56 and perform gain scheduling for the PID module 52. At block 232, the controller 30B determines whether the speed of the condenser fan 20 based upon the output fan speed detector 66. If the speed is zero, then the controller proceeds to block 234. At block 234, the controller 30B determines an initial speed of the fan 20 based on the gain scheduling performed at block 230. If at block 232 the controller 30B determines that the fan speed is not zero, then the controller 30B bypasses block 234.

At block 236, the controller 30B records current speed of the fan 20 for bumpless transfer. At block 238, the controller 30B reads both the sensed refrigerant temperature based on the input received from the refrigerant temperature sensor 28, and the target refrigerant temperature (setpoint) from the module 36. The difference or error between the sensed refrigerant temperature and the target refrigerant temperature is input to the PID module 52. Based on this error, the PID module 52 calculates an output at block 240. This output represents a speed of the motor 22, and thus the fan 20, sufficient to bring the refrigerant temperature sensed by the sensor 28 to the target refrigerant temperature provided by module 36. After the output is generated at block 240, the controller 30B can end operation at block 224 (Figure 5) or return to block 204. In various embodiments, control returns to monitor whether the compressor 18 is on or off.

Thus, regardless of the ambient temperature sensed by the sensor 26, the control system 150 maintains the refrigerant temperature at the target refrigerant temperature. This hybrid control can utilize low-cost temperature sensors, such as thermistors that vary resistance with temperature, instead of pressure sensors at the condenser outlet to control the condenser fan speed, and can be used independently or as backup when the pressure sensor 24 fails.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. An air conditioner system comprising:
a condenser fan;
an ambient temperature sensor to sense ambient temperature at the system;
a refrigerant pressure sensor to sense pressure of a refrigerant of the system;
a target refrigerant pressure module to identify an optimum pressure of the refrigerant in the system; and
a controller to generate an output representing a speed of the condenser fan operable to maintain the pressure of the refrigerant at about the optimum pressure as the ambient temperature of the system changes.

2. The air conditioner system of Claim 1 further comprising a compressor.

3. The air conditioner system of any of the preceding claims, wherein the controller includes a function module to generate the output of the controller.

4. The air conditioner system of Claims 1 or 2, wherein the controller includes a PID module to generate the output of the controller.

5. The air conditioner system of Claims 1 or 2, wherein the output includes a first output generated by a function module of the controller and a second output generated by a PID module of the controller, the second output is generated subsequent to the first output upon expiration of a predetermined time period.

6. The air conditioner system of any of the preceding claims, wherein the controller generates an output stopping the condenser fan when the compressor is not activated.

7. The air conditioner system of any of Claims 2-5, wherein the controller generates an output stopping the condenser fan within about 30 seconds upon receipt of an input representing that the compressor is not on.

8. The air conditioner system of any of Claims 2-5, wherein after the controller receives an input representing that the compressor is on, the controller generates an output stopping the condenser fan if the temperature of the refrigerant is not greater than or equal to 15°C.

9. The air conditioner system of any of Claims 2-5, wherein after the controller receives an input representing that the compressor is on, the controller generates an output running the condenser fan according to a preset speed based on sensed ambient temperature if the temperature of the refrigerant is greater than or equal to 15°C, but not greater than or equal to 25°C.

10. The air conditioner system of any of Claims 2-5, wherein after the controller receives an input representing that the compressor is on, the controller generates an output running the condenser fan according to both a preset speed based on sensed ambient temperature and an output of a PID module of the controller if the temperature of the refrigerant is greater than or equal to 25°C, but not greater than or equal to 35°C.

11. A method for controlling a condensing fan of an air conditioner system with a controller comprising:
determining whether a compressor of the air conditioner system is on or off;
operating the condenser fan of the air conditioner system at a first speed corresponding to a sensed ambient temperature for a predetermined time period when the compressor is on; and
operating the condenser fan at a second speed after expiration of the predetermined time period, the second speed determined by the controller based on the sensed ambient temperature and an error between a sensed refrigerant pressure and a target refrigerant pressure, the second speed sufficient to move the sensed refrigerant pressure to the target refrigerant pressure.

12. The method of Claim 11, further comprising determining the second speed with a PID module of the controller.

13. The method of any of Claims 11 or 12, further comprising operating the condenser fan at a third speed determined by the controller based on the sensed ambient temperature and an error between a sensed refrigerant temperature and a target refrigerant temperature, the third speed sufficient to move the sensed refrigerant temperature to the target refrigerant temperature.

14. The method of Claim 13, further comprising operating the condenser fan at the third speed only when the sensed refrigerant temperature is greater than or equal to 35°C.

15. A method for controlling a condensing fan of an air conditioner system with a controller comprising:
stopping the condensing fan when sensed refrigerant temperature is less than a first predetermined refrigerant temperature;
operating the condensing fan at a first speed predetermined to correspond to sensed ambient temperature when sensed refrigerant temperature is greater than or equal to the first predetermined refrigerant temperature and less than a second predetermined refrigerant temperature;
operating the condensing fan at a second speed predetermined to correspond to sensed ambient temperature and based on error between sensed refrigerant temperature and a target refrigerant temperature when sensed refrigerant temperature is greater than or equal to the second predetermined refrigerant temperature and less than a third predetermined refrigerant temperature, the second speed sufficient to move sensed refrigerant temperature to the target refrigerant temperature; and
operating the condensing fan at a third speed based on error between sensed refrigerant temperature and the target refrigerant temperature when sensed refrigerant temperature is greater than or equal to a third predetermined refrigerant temperature that is greater than the second predetermined refrigerant temperature, the third speed sufficient to move sensed refrigerant temperature to the target refrigerant temperature.

16. The method of Claim 15, further comprising setting the first predetermined refrigerant temperature to 15°C; setting the second predetermined refrigerant temperature to 25°C, and setting the third predetermined refrigerant temperature to 35°C.

17. The method of Claim 15, further comprising operating the condensing fan at a fourth speed determined by the controller based on sensed ambient temperature and an error between sensed refrigerant pressure and a target refrigerant pressure, the fourth speed sufficient to move sensed refrigerant pressure to the target refrigerant pressure.
